# EUROPÄISCHE PATENTSCHRIFT

(11) **EP 3 431 735 B1**
(45) Veröffentlichungstag und Bekanntmachung des Hinweises auf die Patenterteilung: **21.10.2020**
(21) Anmeldenummer: 18184689.0
(22) Anmeldetag: 20.07.2018
(51) Int. Cl.: F02B 37/18, F02D 9/10, F02M 26/54, F02M 26/70, F02M 26/73, F02M 26/74, F16K 31/04

(54) **KLAPPENVORRICHTUNG**
FLAP DEVICE
DISPOSITIF FORMANT VOLET

(30) Priorität: 20.07.2017 DE 102017116423
(43) Veröffentlichungstag der Anmeldung: 23.01.2019
(73) Patentinhaber: Pierburg GmbH, 41460 Neuss (DE)
(72) Erfinder: NOWAK, Martin, 51379 Leverkusen (DE); ROTHGANG, Stefan, 47495 Rheinberg (DE); FERNER, Hendrik, 41564 Kaarst (DE)
(74) Vertreter: terpatent Patentanwälte ter Smitten Eberlein-Van Hoof Rütten Daubert

(56) Entgegenhaltungen:
- EP-A2- 0 972 918
- WO-A1-2007/124851
- WO-A1-2010/103249
- WO-A1-2015/169459
- WO-A1-2016/087109
- CN-Y- 201 248 005
- DE-A1- 2 802 038
- DE-A1-102004 040 817
- DE-A1-102013 103 105
- DE-A1-102014 017 524
- JP-A- 2001 289 071

## Beschreibung

Die Erfindung betrifft eine Klappenvorrichtung mit einem Stellergehäuse und einem Strömungsgehäuse, wobei in dem Strömungsgehäuse ein Strömungskanal mit einem darin angeordneten Klappenelement ausgebildet ist, und in dem Stellergehäuse ein Steller zum Betätigen des Klappenelements angeordnet ist, wobei eine Abtriebswelle des Stellers über eine Kupplung mit einer Klappenwelle drehfest verbunden ist, wobei eine Hülse zumindest einen axialen Abschnitt der Kupplung vollständig radial umgibt.

Derartige Klappenvorrichtungen werden beispielsweise als Abgasstauklappen oder als Abgasrückführventile in Niederdruck- oder Hochdruckabgaskreisläufen eingesetzt und dienen zur Regelung einer zu den Zylindern eines Verbrennungsmotors zurückführenden Abgasmenge oder zur Regelung des Drucks im Abgasrückführkanal zur Verringerung der Schadstoffemissionen des Verbrennungsmotors. Auch ist es bekannt, derartige Ventile als Waste-Gate-Ventile an der Turbine eines Turboladers zu verwenden.

Die Klappenvorrichtung weist üblicherweise ein Strömungsgehäuse auf, in dem ein Strömungskanal ausgebildet ist. In dem Strömungskanal ist ein Klappenelement angeordnet, welches üblicherweise an einer Klappenwelle befestigt ist und über die Klappenwelle drehbar in dem Strömungsgehäuse gelagert ist. Die Klappenwelle ist mit einem elektromotorischen Steller in Eingriff, wobei eine Abtriebswelle des elektromotorischen Stellers über eine Kupplung mit der Klappenwelle drehfest verbunden ist. Diese Kupplung dient neben der Verbindung der beiden Wellen zur Verringerung des Wärmeübergangs von der Klappenwelle in den Steller. Der elektromotorische Steller ist in einem Stellergehäuse angeordnet, wobei das Stellergehäuse an dem Strömungsgehäuse befestigt ist.

Eine derartige Klappenvorrichtung offenbart die DE 10 2014 017 524 A1. Die Klappenvorrichtung weist ein Stellergehäuse und ein Strömungsgehäuse auf, wobei in dem Stellergehäuse ein Steller angeordnet ist und in dem Strömungsgehäuse bzw. in dem im Strömungsgehäuse ausgebildeten Strömungskanal ein Klappenelement angeordnet ist. Das Klappenelement ist an einer Klappenwelle befestigt, welche mit einer Abtriebswelle des Stellers über eine Kupplung drehfest verbunden ist. Das Stellergehäuse ist über ein Halteelement an dem Strömungsgehäuse befestigt, wobei das Halteelement ein Halteblech, einen topfförmigen Deckel und eine Hülse aufweist. Das Halteblech, der topförmige Deckel und die Hülse sind miteinander verscheißt. Die Hülse ist an das Strömungsgehäuse geschweißt und an dem Halteblech ist das Stellergehäuse über eine Schraubenverbindung befestigt.

Das Halteelement, insbesondere der topfförmige Deckel und die Hülse, umgeben die aus dem Stellergehäuse herausragenden Abtriebswelle, die aus dem Strömungsgehäuse herausragende Klappenwelle und die Kupplung, wodurch insbesondere die Kupplung vor Kondens- oder Spritzwasser, Staub, Salz sowie andere Verunreinigungen geschützt wird.

Des Weiteren ist aus der DE 10 2004 040 817 A1 eine Klappenvorrichtung bekannt, bei der die Kupplung zwischen der Aktorwelle und der Klappenwelle von einer Hülse umgeben ist. Wie und ob diese Hülse befestigt wird, wird nicht offenbart.

Des Weiteren ist aus der EP 0 972 918 A2 eine Klappenvorrichtung bekannt, bei der das Strömungsgehäuse am Aktorgehäuse über eine Hülse befestigt ist, die jeweils mittels Schrauben mit den beiden Gehäuseteilen verbunden ist. Innerhalb dieser mehrere Schlitze aufweisenden Hülse ist eine Federkupplung ausgebildet, über die die Klappenwelle mit der Aktorwelle verbunden ist.

Nachteilig an einer derartigen Ausführung ist, dass ein zuverlässiger Betrieb der Kupplung nicht gewährleistet ist, da eine ausreichende und zuverlässige Positionierung des Stellergehäuses zum Strömungsgehäuse für einen zuverlässigen Betrieb der Kupplung nicht gewährleistet ist. Dabei ist das Stellergehäuse über eine Schraubenverbindung und über das aus mehreren verschweißten Bauteilen zusammengesetzte Halteelement mit dem Strömungsgehäuse verbunden, wobei die Schraubenverbindung zwingenderweise spielbehaftet ist und durch die Schweißverbindungen ein Verzug der verschweißten Bauteile resultieren kann. Bereits durch einen geringfügigen Versatz bzw. ein Verkippen des Stellergehäuses zum Strömungsgehäuse durch den Verzug kann die Kupplung verspannen und unerwünschte Belastung im Steller oder an der Klappenwelle verursachen, wodurch die Lebensdauer der Klappenvorrichtung reduziert wird.

Der Erfindung liegt daher die Aufgabe zugrunde, eine Klappenvorrichtung bereitzustellen, welche eine ausreichende Positionierung des Stellergehäuses zum Strömungsgehäuse ermöglicht und dadurch einen zuverlässigen Betrieb der Kupplung und damit eine reibungsfreie Drehmomentübertragung gewährleistet.

Diese Aufgabe wird durch eine Klappenvorrichtung mit den Merkmalen des Hauptanspruchs gelöst.

Dadurch, dass die Hülse formschlüssig an dem Stellergehäuse und an dem Strömungsgehäuse radial fixiert ist, wird die Abtriebswelle des Stellers zur Klappenwelle zentriert, so dass ein zuverlässiger Betrieb der Kupplung gewährleistet ist. Dabei ist die Hülse mit einem axialen Ende formschlüssig an dem Stellergehäuse radial fixiert und mit dem entgegengesetzten axialen Ende formschlüssig mit dem Strömungsgehäuse radial fixiert und umgibt entweder lediglich einen axialen Abschnitt der Kupplung oder zusätzlich die Klappenwelle und oder die Abtriebswelle. Durch die rein formschlüssige Fixierung wird ein Verzug beim Zusammenbau vermieden. Des Weiteren wird die Montage vereinfacht. Auf diese Weise wird die Lebensdauer der Klappenvorrichtung erhöht. Außerdem schützt die Hülse die Kupplung vor Kondens- oder Spritzwasser, Staub, Salz sowie anderen Verunreinigungen.

In einer bevorzugten Ausgestaltung weist das Strömungsgehäuse und/oder das Stellergehäuse einen mit der Hülse korrespondierenden Vorsprung auf, wobei die Hülse auf den Vorsprung aufgesteckt oder in den Vorsprung eingesteckt ist. Dadurch kann die Hülse einfach und kostengünstig montiert werden, wobei keine zusätzlichen Verbindungselemente benötigt werden.

Alternativ weist die Hülse mindestens zwei Zentrierungsbolzen auf, welche in mindestens zwei, im Strömungsgehäuse und/oder im Stellergehäuse ausgebildete Aussparungen eingreifen. Dadurch wird die Hülse am Strömungsgehäuse bzw. Stellergehäuse radial fixiert und zusätzlich ein Verdrehen der Hülse bei der Montage und im Betrieb verhindert.

Vorzugsweise sind die Aussparungen im Stellergehäuse unmittelbar an einen im Stellergehäuse ausgebildeten Kühlmittelkanal angrenzend angeordnet. Je nach Einbaulage ist die Hülse thermisch belastet. Durch die an einen Kühlmittelkanal angrenzende Anordnung der Aussparungen kann die Hülse über die in die Aussparungen eingreifenden Zentrierungsbolzen gekühlt werden, so dass auch Wärme aus der Kupplung abgeführt werden kann. Dadurch wird ein thermisch bedingter Verzug der Hülse vermieden und eine zuverlässige Zentrierung der Abtriebswelle des Stellers zur Klappenwelle gewährleistet. Auf diese Weise wird ein zuverlässiger Betrieb der Kupplung trotz thermischer Belastung der Hülse sichergestellt.

Vorzugsweise ist die Hülse an dem Strömungsgehäuse und an dem Stellergehäuse verdrehfest angeordnet, wobei die Hülse beispielsweise durch eine Feder-Nut-Verbindung oder durch die Zentrierungsbolzen an dem Strömungsgehäuse und an dem Stellergehäuse verdrehfest gelagert ist, so dass eine Verdrehung der Hülse um die eigene Symmetrieachse verhindert wird. In dem Stellergehäuse ist eine Sensoranordnung angeordnet. Die Sensoranordnung weist einen in dem Stellergehäuse fest angeordneten Sensor und einen an der Klappenwelle angeordneten Magneten auf. Durch eine undefinierte Verdrehung des Stellergehäuses, beispielsweise durch thermische Dehnungen des Stellergehäuses, verdreht sich der im Stellergehäuse gelagerte Sensor relativ zum an der Klappenwelle angeordneten Magneten, wodurch eine zuverlässige Ermittlung der Drehlage der Klappenwelle bzw. des Klappenelements nicht mehr möglich ist. Durch die verdrehfeste Lagerung der Hülse an dem Strömungsgehäuse und an dem Stellergehäuse wird eine Verdrehung des Stellergehäuses relativ zum Strömungsgehäuse verhindert und dadurch eine zuverlässige Ermittlung der Drehlage des Klappenelements bzw. der Klappenwelle gewährleistet. Eine axiale Verschiebung der Hülse ist trotz der verdrehfesten Lagerung der Hülse weiterhin möglich.

In einer vorteilhaften Ausgestaltung weist die Kupplung ein an der Abtriebswelle befestigtes erstes Kupplungselement und ein an der Klappenwelle befestigtes und mit dem ersten Kupplungselement zusammenwirkendes zweites Kupplungselement auf, wobei die Hülse die Kupplungselemente radial umgibt. Dadurch wird die Kupplung vor Kondens- oder Spritzwasser, Staub, Salz sowie andere Verunreinigungen geschützt.

Vorzugsweise ist die Kupplung als Oldham-Kupplung ausgeführt, welche das an der Abtriebswelle befestigte erste Kupplungselement, das an der Klappenwelle befestigte zweite Kupplungselement und ein drittes Kupplungselement ausweist, wobei das dritte Kupplungselement mit dem ersten Kupplungselement und mit dem zweiten Kupplungselement drehfest verbunden ist. Dabei dient das dritte Kupplungselement als Übertragungselement zwischen dem ersten Kupplungselement und dem zweiten Kupplungselement, wobei das erste Kupplungselement und das dritte Kupplungselement sowie das zweite Kupplungselement und das dritte Kupplungselement über jeweils eine Nut-Feder-Verbindung drehfest miteinander verbunden sind. Dadurch wird die Montage der Klappenvorrichtung erleichtert und die Montage der Klappenvorrichtung auch bei schwer zugänglichen Einbauverhältnissen ermöglicht.

Vorzugsweise ist zumindest ein Kupplungselement aus einem Material mit geringer Wärmeleitfähigkeit hergestellt, wodurch ein Wärmeübergang zwischen dem Strömungsgehäuse und dem Stellergehäuse über die beiden Wellen reduziert wird und die Lebensdauer des Stellers erhöht wird.

Vorzugsweise sind das Stellergehäuse und das Strömungsgehäuse über mindestens zwei Schraubenverbindungen, vorzugsweise drei Schraubenverbindungen, miteinander fest verbunden, wobei die Schraubenverbindungen jeweils ein Entkopplungselement aufweisen. Das Stellergehäuse wird über die Schraubenverbindungen an dem Strömungsgehäuse montiert, wobei die Wärmedehnungen der Komponenten der Schraubenverbindungen, welche beispielsweise mehrere an dem Strömungsgehäuse ausgebildete Gewindebolzen sind, voneinander abweichen und aufgrund des daraus resultierenden Verkippen des Stellergehäuses ein Verzug des Stellergehäuses entsteht. Durch die Entkopplungselemente werden die Wärmedehnungen kompensiert, das Verkippen des Stellergehäuses aufgenommen und der Verzug des Stellergehäuses verhindert. Außerdem werden durch die Entkopplungselemente die Wärmeübertragung sowie die Schwingungsübertragung zwischen dem Strömungsgehäuse und dem Stellergehäuse reduziert.

In einer bevorzugten Ausgestaltung ist zwischen dem Strömungsgehäuse und dem Stellergehäuse ein Hitzeschutzelement angeordnet. Dadurch wird die Erwärmung des Stellergehäuses, welche aus der Wärmestrahlung des Strömungsgehäuses resultiert, reduziert.

Vorzugsweise ist das Hitzeschutzelement durch die Schraubenverbindung zwischen dem Strömungsgehäuse und dem Stellergehäuse befestigt, wobei das Hitzeschutzelement eine Aussparung aufweist, durch die die Hülse hindurchgreift. Dadurch wird das Hitzeschutzelement einfach und kostengünstig zwischen dem Strömungsgehäuse und dem Stellergehäuse befestigt. Zusätzliche Befestigungsmittel werden nicht benötigt.

In einer vorteilhaften Ausgestaltung ist der Schraubpunkt der mindestens einen Schraubverbindung unmittelbar an einem im Stellergehäuse ausgebildeten Kühlmittelkanal angrenzend angeordnet, wodurch die Wärmeübertragung zwischen dem Strömungsgehäuse und dem Stellergehäuse über die Schraubenverbindung reduziert wird. Dabei wird die an das Stellergehäuse übertragene Wärme direkt abgeführt, so dass die Erwärmung des Stellers reduziert wird.

Es wird somit eine Klappenvorrichtung geschaffen, welche eine für den zuverlässigen Betrieb der Kupplung ausreichende Positionierung des Stellergehäuses zum Strömungsgehäuse und dadurch eine Zentrierung der Abtriebswelle des Stellers zur Klappenwelle ermöglicht, so dass eine auf Dauer klemmfreie und reibungsarme Verbindung geschaffen wird.

Ein Ausführungsbeispiel der Erfindung wird anhand der Figuren näher erläutert.

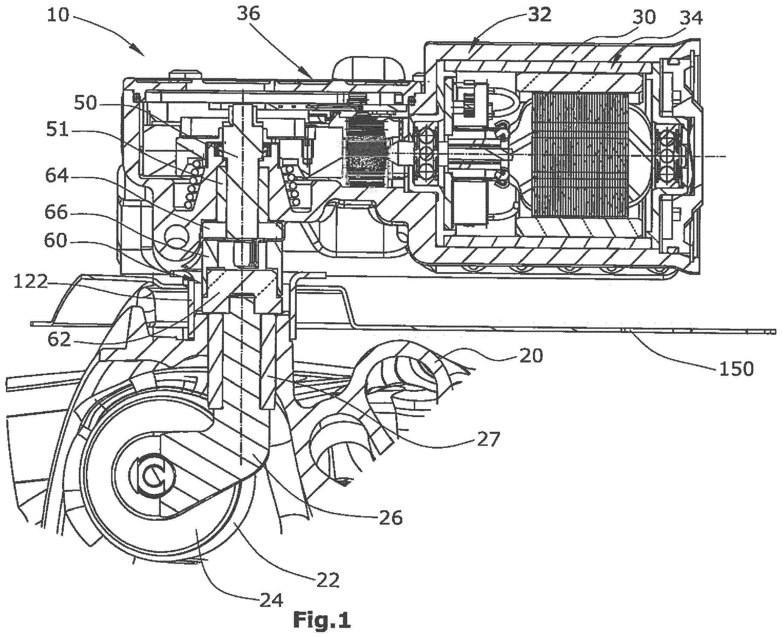

Die Figur 1 zeigt eine erfindungsgemäße Ausführung einer Klappenvorrichtung in Schnittdarstellung.

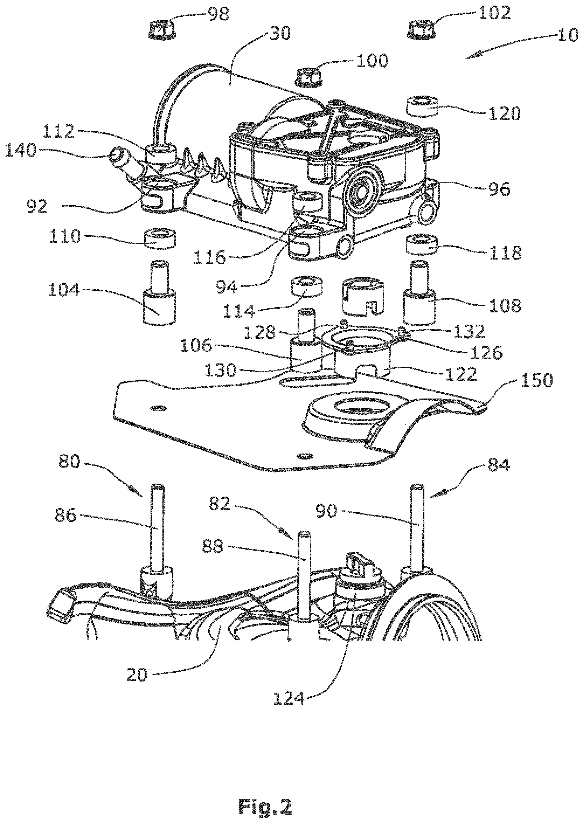

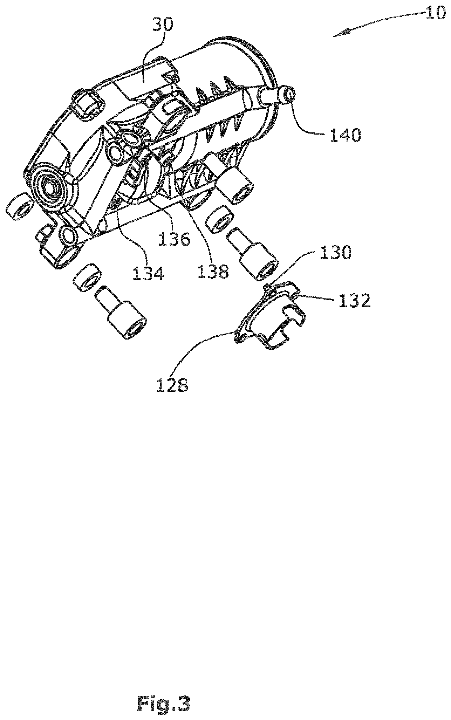

Die Figuren 2 und 3 zeigen die erfindungsgemäße Ausführung der Klappenvorrichtung in Explosionsdarstellung.

Die Figuren zeigen eine Klappenvorrichtung 10, die im vorliegenden Fall als Waste-Gate-Ventil zur möglichen Umgehung einer Turbine eines Turboladers fungiert, mit einem Strömungsgehäuse 20 und einem Stellergehäuse 30, wobei das Stellergehäuse 30 an dem Strömungsgehäuse 20 befestigt ist.

In dem Strömungsgehäuse 20 ist ein Strömungskanal 22 ausgebildet, welcher von den Abgasen eines Verbrennungsmotors durchströmt wird. In dem Strömungskanal 22 ist ein Klappenelement 24 angeordnet, welches drehbar in dem Strömungsgehäuse 20 gelagert ist. Das Klappenelement 24 ist an einer Klappenwelle 26 befestigt, wobei die Klappenwelle 26 L-förmig ausgeführt ist und über ein als Gleitlagerhülse ausgeführtes Lagerelement 27 drehbar in dem Strömungsgehäuse 20 gelagert ist. Ein axiales Ende der Klappenwelle 26 ragt aus dem Strömungsgehäuse 20 heraus, wobei an diesem herausragenden axialen Ende der Klappenwelle 26 ein erstes Kupplungselement 62 einer Kupplung 60 drehfest angeordnet ist. Durch eine derartige Ausgestaltung der Klappenwelle 26 ist eine 360°-Drehung der Klappenwelle 26, bzw. des Klappenelements 24 möglich.

In dem Stellergehäuse 30 ist ein elektromotorischer Steller 32 angeordnet. Der elektromotorische Steller 32 weist einen Elektromotor 34 und ein Getriebe 36 auf, welches sich aus mehreren Getriebestufen mit den dazugehörigen Zahnrädern zusammensetzt. Das Getriebe 36 ist antriebsseitig mit dem Elektromotor 34 und abtriebseitig mit einer Abtriebswelle 50 gekoppelt. Die Abtriebswelle 50 ist über ein als Gleitlagerhülse ausgebildetes Lagerelement 51 drehbar in dem Stellergehäuse 30 gelagert und ist mit einem aus dem Stellergehäuse 30 herausragenden axialen Ende mit einem zweiten Kupplungselement 64 der Kupplung 60 drehfest verbunden.

Die Kupplung 60 ist im vorliegenden Fall eine Oldham-Kupplung und weist das erste Kupplungselement 62 und das zweite Kupplungselement 64 auf, wobei das an der Klappenwelle 26 angeordnete erste Kupplungselement 62 und das an der Abtriebswelle 50 angeordnete zweite Kupplungselement 64 über ein drittes Kupplungselement 66 miteinander gekoppelt sind. Das dritte Kupplungselement 66 dient als Übertragungselement zwischen dem ersten Kupplungselement 62 und dem zweiten Kupplungselement 64, wobei das erste Kupplungselement 62 und das dritte Kupplungselement 66 sowie das zweite Kupplungselement 64 und das dritte Kupplungselement 66 über jeweils eine Nut-Feder-Verbindung drehfest miteinander verbunden sind. Einer der Kupplungselemente 62, 64, 66 ist aus schlecht wärmeleitendem Keramikwerkstoff hergestellt, wodurch die Abtriebswelle 50 von der Klappenwelle 26 thermisch entkoppelt wird. Außerdem gleicht die Oldham-Kupplung geringfügige Fluchtungsfehler und Verkippungsfehler aus.

Die Befestigung des Stellergehäuses 30 an dem Strömungsgehäuse 20 erfolgt durch drei Schraubenverbindungen 80, 82, 84, wobei die Schraubenverbindungen 80, 82, 84 das Stellergehäuse 30 insbesondere axial an dem Strömungsgehäuse 20 fixieren. Die Schraubenverbindungen 80, 82, 84 weisen jeweils einen an dem Strömungsgehäuse 20 angeordneten Gewindebolzen 86, 88, 90 auf, welcher im montierten Zustand durch jeweils eine in dem Stellergehäuse 30 ausgebildete Bohrung 92, 94, 96 durchgesteckt ist. Die Befestigung erfolgt durch Schraubenmuttern 98, 100, 102, welche auf die jeweiligen Gewindebolzen 86, 88, 90 aufgeschraubt sind. Außerdem weist jede Schraubenverbindung 80, 82, 84 einen Abstandshalter 104, 106, 108 und zwei Entkopplungselemente 110, 112, 114, 116, 118, 120 auf, wobei jeder Gewindebolzen 86, 88, 90 den dazugehörigen Abstandshalter 102, 104, 106 und die dazugehörigen Entkopplungselemente 110, 112, 114, 116, 118, 120 durchdringt. Die Entkopplungselemente 110, 112, 114, 116, 118, 120 sind als Gewebebuchsen, beispielsweise Stahlgewebebuchsen, und ringförmig ausgeführt und sind zwischen dem Stellergehäuse 30 und dem Abstandshalter 104, 106, 108 sowie zwischen der Schraubenmutter 96, 98, 100 und dem Stellergehäuse 30 angeordnet.

Durch eine derartige Ausgestaltung der Befestigung des Stellergehäuses 30 an dem Strömungsgehäuse 20 können das durch die Wärmedehnungen bedingtes Verkippen des Strömungsgehäuses 30 durch die Entkopplungselemente 110, 112, 114, 116, 118, 120 ausgeglichen und die Wärmeübertragung sowie die Übertragung von mechanischen Schwingungen zwischen dem Stellergehäuse 30 und dem Strömungsgehäuse 20 reduziert werden. Dabei wird insbesondere die Wärmeübertragung zwischen dem von heißen Abgasen durchströmten Strömungsgehäuse 20 und dem Stellergehäuse 30 reduziert, wodurch der in dem Stellergehäuse 30 angeordnete Elektromotor 34 sowie andere in dem Stellergehäuse 30 angeordnete, wärmeempfindliche Komponenten des elektromotorischen Stellers 32, beispielsweise eine Sensoranordnung zur Bestimmung der Drehlage der Klappenwelle, vor Beschädigungen geschützt werden. Die Sensoranordnung weist einen Magneten auf, der an der Abtriebswelle 50 oder an einem Zahnsegment des Getriebes 36 angeordnet ist und mit einem in dem Stellergehäuse 30 angeordneten Hallsensor zusammenwirkt. Zusätzlich ist zwischen dem Stellergehäuse 30 und dem Strömungsgehäuse 20 ein Hitzeschutzelement 150 angeordnet, welches durch die Schraubenverbindungen 80, 82, 84 fixiert ist und die Wärmeübertragung zwischen dem Strömungsgehäuse 20 und dem Stellergehäuses 30 in Form von Wärmestrahlung reduziert.

Erfindungsgemäß weist die Klappenvorrichtung 10 eine Hülse 122 auf. Die Hülse 122 ist an dem Strömungsgehäuse 20 und an dem Stellergehäuse 30 formschlüssig radial fixiert, wobei das Strömungsgehäuse 20 für die formschlüssige Fixierung der Hülse 122 einen zylindrischen Vorsprung 124 aufweist, welcher koaxial zur Klappenwelle 56 ausgebildet ist. Die Hülse 122 liegt mit der Innenumfangsfläche an der Außenumfangsfläche des zylindrischen Vorsprungs 124 an, so dass die Hülse 122 radial fixiert ist. An dem entgegengesetzten axialen Ende der Hülse 122 ist ein Kragen 126 mit drei Zentrierungsbolzen 128, 130, 132 ausgebildet. Jeder Zentrierungsbolzen 128, 130, 132 greift in jeweils eine in dem Stellergehäuse 30 ausgebildete korrespondierend geformte Aussparung 134, 136, 138 ein, wodurch die Hülse 122 formschlüssig an dem Stellergehäuse 30 radial und rotatorisch fixiert ist.

Durch die Hülse 122, welche formschlüssig an dem Strömungsgehäuse 20 und an dem Stellergehäuse 30 radial fixiert ist, wird das Stellergehäuse 30 derart zum Strömungsgehäuse 20 ausgerichtet, dass die Abtriebswelle 50 zur Klappenwelle 26 zentriert ist, wobei die Drehachse der Abtriebswelle 50 und die Drehachse der Klappenwelle 26 auf einer gemeinsamen Achse zueinander fluchtend angeordnet sind. Eine verkippte Anordnung der Abtriebswelle 50 zur Klappenwelle 26, die beispielsweise zu einem Verklemmen der Kupplung 60 führt, wird durch die Hülse 120 verhindert. Die Hülse 120 umgibt dabei im vorliegenden Ausführungsbeispiel einen axialen Abschnitt der Kupplung 60 und der Klappenwelle 56.

Zum Schutz des elektromotorischen Stellers 32 vor einer thermischen Überlastung weist das Stellergehäuse 30 außerdem einen Kühlmittelkanal 140 auf, welcher dauerhaft von einem Kühlmittel durchströmt wird und die Wärme von dem Stellergehäuse 30 abführt. Dabei sind die Aussparungen 134, 136, 138 und die Bohrungen 92, 94, 96 angrenzend an dem Kühlmittelkanal 140 angeordnet, so dass eine Wärmeübertragung zwischen dem Strömungsgehäuse 20 und dem Stellergehäuse 30 über die Hülse 122 und über die Schraubenverbindungen 80, 82, 84 reduziert wird.

Es wird somit eine Klappenvorrichtung 10 geschaffen, welche eine für den zuverlässigen Betrieb der Kupplung 60 ausreichende Positionierung des Stellergehäuses 30 zum Strömungsgehäuse 20 und dadurch eine Zentrierung der Abtriebswelle 50 des Stellers 30 zur Klappenwelle 26 ermöglicht.

Es sollte deutlich sein, dass auch andere konstruktive Ausführungsformen der Klappenvorrichtung im Vergleich zur beschriebenen Ausführungsform möglich sind, ohne den Schutzbereich des Hauptanspruchs zu verlassen. Insbesondere könnte die Hülse zusätzlich die gesamte Kupplung oder einen axialen Abschnitt der Abtriebswelle umgeben. Auch ist es denkbar die Hülse so anzuordnen, dass diese einen axialen Abschnitt der Abtriebswelle und der Kupplung umgibt.

## Patentansprüche

1. Klappenvorrichtung (10) mit
einem Stellergehäuses (30) und einem Strömungsgehäuse (20), wobei in dem Strömungsgehäuse (20) ein Strömungskanal (22) mit einem darin angeordneten Klappenelement (24) ausgebildet ist, und in dem Stellergehäuse (30) ein Steiler (32) zum Betätigen des Klappenelements (24) angeordnet ist, wobei eine Abtriebswelle (50) des Stellers (32) über eine Kupplung (60) mit einer Klappenwelle (26) drehfest verbunden ist, wobei eine Hülse (122) zumindest einen axialen Abschnitt der Kupplung vollständig radial umgibt,
**dadurch gekennzeichnet, dass**
die Hülse (122) formschlüssig an dem Stellergehäuse (30) und an dem Strömungsgehäuse (20) radial fixiert ist.

2. Klappenvorrichtung nach Anspruch 1,
**dadurch gekennzeichnet, dass**
das Strömungsgehäuse (20) und/oder das Stellergehäuse (30) einen mit der Hülse (122) korrespondierenden Vorsprung (124) aufweist, wobei die Hülse (122) auf den Vorsprung (124) aufgesteckt oder in den Vorsprung (124) eingesteckt ist.

3. Klappenverrichtung nach Anspruch 1 oder 2,
**dadurch gekennzeichnet, dass**
die Hülse (122) mindestens zwei Zentrierungsbolzen (128, 130, 132) aufweist, welche in mindestens zwei, im Strömungsgehäuse (20) und/oder im Stellergehäuse (30) ausgebildete Aussparungen (134, 136, 138) eingreifen.

4. Klappenvorrichtung nach Anspruch 3,
**dadurch gekennzeichnet, dass**
die Aussparungen (134, 136, 138) im Stellergehäuse (30) unmittelbar an einen im Stellergehäuse (30) ausgebildeten Kühlmittelkanal (140) angrenzend angeordnet sind.

5. Klappenvorrichtung nach einem der vorhergehenden Ansprüche,
**dadurch gekennzeichnet, dass**
die Hülse (122) an dem Strömungsgehäuse (20) und an dem Stellergehäuse (30) verdrehfest angeordnet ist.

6. Klappenvorrichtung nach einem der vorhergehenden Ansprüche,
**dadurch gekennzeichnet, dass**
die Kupplung (60) ein an der Abtriebswelle (50) befestigtes erstes Kupplungselement (62) und ein an der Klappenwelle (26) befestigtes und mit dem ersten Kupplungselement (62) zusammenwirkendes zweites Kupplungselement (64) aufweist, wobei die Hülse (122) die Kupplungselemente (62, 64) radial umgibt.

7. Klappenvorrichtung nach Anspruch 6,
**dadurch gekennzeichnet, dass**
die Kupplung (60) als Oldham-Kupplung ausgeführt ist, welche das an der Abtriebswelle (50) befestigte erste Kupplungselement (62), das an der Klappenwelle (26) befestigte zweite Kupplungselement (64) und ein drittes Kupplungselement (66) ausweist, wobei das dritte Kupplungselement (66) mit dem ersten Kupplungselement (62) und mit dem zweiten Kupplungselement (64) drehfest verbunden ist.

8. Klappenvorrichtung nach Anspruch 6 oder 7,
**dadurch gekennzeichnet, dass**
zumindest ein Kupplungselement (62, 64, 66) aus einem Material mit geringer Wärmeleitfähigkeit hergestellt ist.

9. Klappenvorrichtung nach einem der vorhergehenden Ansprüche,
**dadurch gekennzeichnet, dass**
das Stellergehäuse (30) und das Strömungsgehäuse (20) über mindestens zwei Schraubenverbindungen (80, 82, 84) miteinander fest verbunden sind, wobei die Schraubenverbindungen (80, 82, 84) jeweils ein Entkopplungselement (110, 112, 114, 116, 118, 120) aufweisen.

10. Klappenvorrichtung nach einem der vorhergehenden Ansprüche,
**dadurch gekennzeichnet, dass**
zwischen dem Strömungsgehäuse (20) und dem Stellergehäuse (30) ein Hitzeschutzelement (150) angeordnet ist.

11. Klappenvorrichtung nach den Ansprüchen 9 und 10,
**dadurch gekennzeichnet, dass**
das Hitzeschutzelement (150) durch die Schraubenverbindung (80, 82, 84) zwischen dem Strömungsgehäuse (20) und dem Stellergehäuse (30) befestigt ist, wobei das Hitzeschutzelement (150) eine Aussparung aufweist, durch die die Hülse (122) hindurchgreift.

12. Klappenvorrichtung nach einem der Ansprüche 9 bis 11,
**dadurch gekennzeichnet, dass**
der Schraubpunkt der mindestens einen Schraubverbindung (80, 82, 84) unmittelbar an einem im Stellergehäuse (30) ausgebildeten Kühlmittelkanal (140) angrenzend angeordnet ist.

## Claims

1. Flap device (10) comprising
an actuator housing (30) and a flow housing (20), a flow channel (22) with a flap element (24) arranged therein being formed in the flow housing (20), and an actuator (32) being arranged in the actuator housing (30) for actuating the flap element (24), an output shaft (50) of the actuator (32) being non-rotatably connected to a flap shaft (26) via a coupling (60), a sleeve (122) radially surrounding at least one axial section of the coupling completely,
**characterized in that**
the sleeve (122) is fixed radially in a form-fitting manner to the actuator housing (30) and to the flow housing (20).

2. Flap device according to claim 1, **characterized in that** the flow housing (20) and/or the actuator housing (30) has a projection (124) corresponding with the sleeve (122), the sleeve (122) being set onto the projection (124) or inserted into the projection (124).

3. Flap device according to claim 1 or 2, **characterized in that** the sleeve (122) comprises at least two centering bolts (128, 130, 132) which engage into at least two recesses (134, 136, 138) formed in the flow housing (20) and/or the actuator housing (30).

4. Flap device according to claim 3, **characterized in that** the recesses (134, 136, 138) in the actuator housing (30) are arranged directly adjacent to a coolant channel (140) formed in the actuator housing (30).

5. Flap device according to one of the preceding claims, **characterized in that** the sleeve (122) is arranged non-rotatably on the flow housing (20) and the actuator housing (30).

6. Flap device according to one of the preceding claims, **characterized in that** the coupling (60) comprises a first coupling element (62) mounted to the output shaft (50) and a second coupling element (64) mounted to the flap shaft (26) and cooperating with the first coupling element (62), the sleeve (122) radially surrounding the coupling elements (62, 64).

7. Flap device according to claim 6, **characterized in that** the coupling (60) is designed as an Oldham coupling which comprises the first coupling element (62) mounted to the output shaft (50), the second coupling element (64) mounted to the flap shaft (26) and a third coupling element (66), the third coupling element (66) being connected to the first coupling element (62) and the second coupling element (64) in a manner to rotate with these.

8. Flap device according to claim 6 or 7, **characterized in that** at least one coupling element (62, 64, 66) is made of a material with low thermal conductivity.

9. Flap device according to one of the preceding claims, **characterized in that** the actuator housing (30) and the flow housing (20) are firmly connected to one another via at least two screw connections (80, 82, 84), the screw connections (80, 82, 84) each comprising a decoupling element (110, 112, 114, 116, 118, 120).

10. Flap device according to one of the preceding claims, **characterized in that** a heat protection element (150) is arranged between the flow housing (20) and the actuator housing (30).

11. Flap device according to claims 9 and 10, **characterized in that** the heat protection element (150) is fastened by the screw connection (80, 82, 84) between the flow housing (20) and the actuator housing (30), the heat protection element (150) comprising a recess through which the sleeve (122) engages.

12. Flap device according to one of claims 9 to 11, **characterized in that** the screwing point of the at least one screw connection (80, 82, 84) is arranged directly adjacent to a coolant channel (140) formed in the actuator housing (30).

## Revendications

1. Dispositif de clapet (10) comprenant
un carter d'actionneur (30) et un carter d'écoulement (20), un canal d'écoulement (22) avec un élément de clapet (24) disposé à l'intérieur étant formé dans le carter d'écoulement (20), et un actionneur (32) étant disposé dans le carter d'actionneur (30) pour actionner l'élément de clapet (24), un arbre de sortie (50) de l'actionneur (32) étant relié de manière non rotative à un arbre de clapet (26) par un accouplement (60), un manchon (122) radialement entourant complètement au moins une section axiale de l'accouplement,
**caractérisé en ce que**
le manchon (122) est fixé radialement de manière positive sur le carter d'actionneur (30) et sur le carter d'écoulement (20).

2. Dispositif de valve selon la revendication 1, **caractérisé en ce que** le carter d'écoulement (20) et/ou le carter d'actionneur (30) présente une saillie (124) correspondant au manchon (122), le manchon (122) étant enfiché sur la saillie (124) ou inséré dans la saillie (124).

3. Dispositif à clapet selon la revendication 1 ou 2, **caractérisé en ce que** le manchon (122) comprend au moins deux boulons de centrage (128, 130, 132) qui s'engagent dans au moins deux évidements (134, 136, 138) formés dans le carter d'écoulement (20) et/ou dans le carter d'actionneur (30).

4. Dispositif de valve selon la revendication 3, **caractérisé en ce que** les évidements (134, 136, 138) dans le carter d'actionneur (30) sont disposés directement adjacent à un canal de liquide de refroidissement (140) formé dans le carter d'actionneur (30).

5. Dispositif de clapet selon l'une quelconque des revendications précédentes, **caractérisé en ce que** le manchon (122) est agencé de manière non rotative sur le carter d'écoulement (20) et le carter d'actionneur (30).

6. Dispositif de clapet selon l'une quelconque des revendications précédentes, **caractérisé en ce que** l'accouplement (60) comprend un premier élément d'accouplement (62) fixé à l'arbre de sortie (50) et un deuxième élément d'accouplement (64) fixé à l'arbre de clapet (26) et coopérant avec le premier élément d'accouplement (62), le manchon (122) radialement entourant les éléments d'accouplement (62, 64).

7. Dispositif de clapet selon la revendication 6, **caractérisé en ce que** l'accouplement (60) est conçu comme un accouplement de type Oldham comprenant le premier élément d'accouplement (62) fixé à l'arbre de sortie (50), le deuxième élément d'accouplement (64) fixé à l'arbre de clapet (26) et un troisième élément d'accouplement (66), le troisième élément de couplage (66) étant relié en rotation au premier élément d'accouplement (62) et au deuxième élément d'accouplement (64).

8. Dispositif de clapet selon la revendication 6 ou 7, **caractérisé en ce qu'**au moins un élément d'accouplement (62, 64, 66) est réalisé en un matériau à faible conductivité thermique.

9. Dispositif de clapet selon l'une quelconque des revendications précédentes, **caractérisé en ce que** le carter d'actionneur (30) et le carter d'écoulement (20) sont solidaires l'un de l'autre par au moins deux raccords à vis (80, 82, 84), les raccords à vis (80, 82, 84) comprenant chacun un élément de découplage (110, 112, 114, 116, 118, 120).

10. Dispositif de clapet selon l'une quelconque des revendications précédentes, **caractérisé en ce qu'**un élément de protection thermique (150) est disposé entre le carter d'écoulement (20) et le carter d'actionneur (30).

11. Dispositif à clapet selon les revendications 9 et 10, **caractérisé en ce que** l'élément de protection thermique (150) est fixé par le raccord à vis (80, 82, 84) entre le carter d'écoulement (20) et le carter d'actionneur (30), l'élément de protection thermique (150) présentant un évidement à travers lequel le manchon (122) s'engage.

12. Dispositif de valve selon l'une des revendications 9 à 11, **caractérisé en ce que** le point de vissage du au moins un raccord à vis (80, 82, 84) est disposé directement à côté d'un canal de liquide de refroidissement (140) formé dans le carter d'actionneur (30).
